# EUROPEAN PATENT SPECIFICATION

(11) **EP 4 144 641 B1**
(45) Date of publication and mention of the grant of the patent: **26.03.2025**
(21) Application number: 21194648.8
(22) Date of filing: 02.09.2021
(51) Int. Cl.: B64D 11/04, A47B 31/06, B64D 11/00

(54) **EQUIPMENT FOR USE IN GALLEYS IN VESSELS**
AUSRÜSTUNG ZUR VERWENDUNG IN KÜCHEN AUF SCHIFFEN
ÉQUIPEMENT POUR UTILISATION DANS DES CUISINES DE NAVIRES

(43) Date of publication of application: 08.03.2023
(73) Proprietor: B/E Aerospace, Inc., Winston Salem, NC 27105 (US)
(72) Inventor: VERMEULEN, Timothy, 3439 MG Ultrecht (NL)
(74) Representative: Dehns

(56) References cited:
- WO-A1-2006/093410
- US-A- 5 240 320
- US-A1- 2018 273 157
- US-A1- 2020 223 550

## Description

This disclosure relates to heating equipment for use in galleys in vessels and in particular to the construction of such equipment.

Galleys in vessels such as aircraft, ships or trains are typically located in areas where it is desired to maximise the use of a small amount of available space. In, for example, a commercial aircraft a galley will typically be equipped with a food and beverage preparation area and will include equipment for heating or chilling food, or for maintaining the temperature of food. Collectively, such equipment may be termed galley equipment.

Galley equipment will typically include at least one interior. Each interior is defined by an interior liner. Each interior liner typically defines an access mouth through which the interior defined by that interior liner may be accessed from outside the galley equipment, and a void that may be used to contain food. The galley equipment will typically further include insulation surrounding the or each interior liner, an outer element that surrounds the insulation and the or each interior liner, and the same number of doors as there are interior liners. A door is associated with each interior liner and that door is dimensioned to reversibly close the access mouth defined by the interior liner with which the door is associated.

US 2018/273157 A1 discloses galley trolley compartment doors that replace traditional trolley retainer latches used to secure trolleys when positioned in galley compartments. The galley trolley compartment doors are designed with engaging arms that help secure the trolleys in place under required loads. Some embodiments of the galley trolley compartment doors are designed with thicknesses that can help improve cooling of the trolley compartment.

US 2020/223550 A1 discloses an on-board device for a galley or a bar for an airplane which has at least one visible side wall and at least one paneling for partially or completely concealing a work area of the on-board device. The paneling is adjustable between at least two configurations. The paneling forms or covers at least part of the side wall in a first configuration and conceals the work area partially or completely in a second configuration.

According to a first aspect of the present disclosure, there is provided an item of galley equipment as defined in claim 1.

The interior liner is configured to define an interior within which food or beverages may be stored. The access mouth defined by the interior liner is of dimensions that allow human user access to the interior.

In an embodiment of the above embodiment, the interior liner defines an interior volume of a substantially cubic or substantially rectangular cuboid shape. In some embodiments the access mouth comprises all of or a portion of one of the faces of the cubic or rectangular cuboid shape.

In an embodiment of any of the above embodiments, the item of galley equipment comprises a one or more of an insulation material at least partially surrounding the interior liner, a frame, and an outer shell, in which none of the insulation material, frame or outer shell overlie or prevent access to the access mouth.

In an embodiment of any of the above embodiments, the first and second doors each comprise a closure face. The closure faces being the faces of the doors that overlies the access mouth when the first and second doors are in the closed position. In that position the access mouth is closed and hot or cold air is impeded from entering or exiting the interior.

In an embodiment of any of the above embodiments, the doors may include one or more seal means to assist in the closure of the access mouth.

In an embodiment of any of the above embodiments, the first door is hingedly connected to a part of the item of galley equipment that is not the second door or anything supported on the second door. For example the first door may be hingedly attached to one or more of the insulation material, frame or outer shell.

In an embodiment of any of the above embodiments, the second door is hingedly connected to a part of the item of galley equipment that is not the first door or anything supported on the first door. For example the second door may be hingedly attached to one or more of the insulation material, frame or outer shell.

In an embodiment of any of the above embodiments, the hinged connection of one or both of the first and second doors to the part of the item of galley equipment may be via one or more hinges associated with each door, or via other mechanical connection means that will connect the door the remainder of the item of galley equipment and allow the doors to rotate about the connection means or, if the door is connected via two or more connection means, around the axis of rotation for each of the connection means.

In an embodiment of any of the above embodiments, an open position for either of the first and second doors is a position where the door is not partially closing the access mouth. In some embodiments, the hinged connection of each door to a part of the item of galley equipment is configured to allow each door to rotate at least 90 degrees around the axis of rotation about which the door rotates. This allows the door to move to a fully open position in which the door does not block or impede access to the access mouth.

In an embodiment of any of the above embodiments, each door supports or incorporates a part of a catch. The catch can, when the parts of the catch are engaged with each other, hold the first and second doors in their respective closed positions.

In an embodiment of any of the above embodiments, the access mouth is rectangular and the first and second doors are of substantially the same dimensions as each other. In such embodiments each of the first and second doors closes half of the access mouth when the first and second doors are in their closed position.

In an embodiment of any of the above embodiments, when both the first and second doors are in their closed position the mobile and static parts of the catch are adjacent to each other.

An arrangement according to the first aspect is advantageous because it has the result that when the mobile part of the catch is in the open configuration, which is the configuration that the mobile part of the catch is most likely to occupy when the door supporting that part of the catch is in an open position, the mobile part of the catch does not extend from the first edge of the door. This increases the safety of users of the item of galley equipment because the galley is typically small and as such the user will be close to the open door when working in the galley. Because the mobile part of the catch does not extend from the first edge of the door the catch does not represent a hazard. This is in contrast to a catch part that does extend out of the first edge of the open door where the catch part could catch on a limb or an item of clothing of the user and cause damage to the user / their clothing or cause an accident.

In an embodiment of any of the above embodiments, the mobile part of the catch may rotate around an axis of rotation that extends between the closure face of the door on which it is supported and the face of the door opposite the closure face.

In an embodiment of any of the above embodiments, the mobile part of the catch part includes a rotation portion that engages with the door, a latch arm, and a user actuation means. The engagement between the rotation portion and the door is such that the rotation portion can rotate relative to the door around an axis of rotation, and the latch arm is caused to move by virtue of the rotation of the rotation portion. The user actuation means allows a user to cause the rotation of the rotation means may comprise a handle or a socket for a key.

In an embodiment of any of the above embodiments, the user actuation means is a handle, and the handle is at least partially located in a recess in the surface of the door that supports the mobile part of the catch. This has an advantage of not providing a surface profile that can catch on a user of the galley or their clothing. It has a further advantage that the handle is less likely to be accidentally knocked and the mobile catch part catch moved to an open configuration.

In an embodiment of any of the above embodiments, the user actuation means is a handle, and the handle provides a user with a visual indication of whether the mobile catch part is in its open or closed configuration.

In an embodiment of any of the above embodiments, the door that supports the mobile part of the catch includes a slot which opens through the first edge of that door. The slot is configured to allow the latch arm to be fully received within the slot when the mobile part of the catch is in the open configuration.

In an embodiment of any of the above embodiments the static part of the catch has the form of a post, bar or other structure that extends in a direction between the closure face of the door on which it is supported and the opposite face to the closure face, and a latching void. The latching void is located on the opposite side of the structure to the first edge of the door that supports the static part of the catch.

In an embodiment of any of the above embodiments, the latch arm of the mobile part of the catch is so configured that movement of the mobile part of the catch into the closed configuration causes a part of the latch arm enter the latching void of the static part of the catch when the first and second doors are in their closed positions. In some embodiments the latch arm comprises a hook like feature and the hook like feature enters the latching void.

In an embodiment of any of the above embodiments, the mobile part of the catch comprises at least one catch element that may reversibly engage with a part of the item of galley equipment that is not a door or the static catch part when both the first and second doors are in their closed position.

In an embodiment of any of the above embodiments, at least one latch element comprises a latch bar that extends from the mobile latch part to an edge of the door on which the mobile latch part is supported that is not the first edge. The latch bar is so configured and its connection to the mobile part of the latch such that the that movement of the mobile part of the catch from the open position to the closed position causes the latch bar to extend from the edge of the door.

In an embodiment of any of the above embodiments, the which supports the mobile part of the catch door includes one or more voids within the structure of the door and the each latch bar extends through a void.

In an embodiment of any of the above embodiments, the item of galley equipment comprises a support structure, in which the support structure is so configured that it will fit within the interior and pass through the access mouth, one of the first and second doors is coupled to the support structure via a coupling, and movement of the door coupled to the support structure between its closed position and an open position causes the support structure to be moved from a retracted position in which the support structure is substantially wholly within the interior to an extended position in which at least part of the support structure extends out of the interior through the access mouth.

The support structure is a structure that may support one or more items of food stuff, packages or containers of food stuff, or beverage containers. The support structure may be a support frame suitable for supporting one or more trays. The trays may be removable from the frame.

The arrangement of this embodiment is advantageous because the movement of the support structure assists a user of the item of galley equipment to remove items of food stuff, packages or containers of food stuff, or beverage containers from the support structure because it at least partially extends out of the interior when the doors are in an open position. This also increases the safety of the item of galley equipment when it is an oven because it lessens the need for the user to reach into the item of galley equipment and thus the chances of the user burning themselves as a result of contact with a hot part of the item of galley equipment.

A further advantage of the arrangement of this embodiment is that when the door coupled to the support structure is in an open position the support structure, by virtue of its extending out of the interior will hold the coupled door in position even if the vessel in which the item of galley equipment is located undergoes sudden movements, for example turbulence in connection with an aircraft. The door being held in position again increases the safety of the user of the item of galley equipment.

In an embodiment of any of the above embodiments, the other of the first and second doors is also coupled to the support structure via a second coupling element and movement of the first and second doors between their closed positions and open positions causes the support structure to be moved from the retracted to the extended position.

In an embodiment of any of the above embodiments, the movement of one of the first and second doors from the closed position to an open position causes the support structure to be moved from the retracted to the extended position and the other of the first and second doors to move from its closed position to an open position. This arrangement is advantageous because it allows a user to open the item of galley equipment and cause the support structure to partially advance out of the interior using only one hand.

In an embodiment of any of the above embodiments, the movement of the door or doors coupled to the support structure from an open position to the closed position causes the support structure to move from an extended position to the retracted position.

In an embodiment of any of the above embodiments, the support structure reversibly latches in an extended position when the or each door to which the support structure is coupled moves into a predetermined open position, and the latching of the support structure needs to be released before each door to which the support structure is coupled may move towards its closed position. This arrangement is advantageous because it lessens the likelihood of any unexpected movement of the support structure back into the interior and the consequential movement of one or both of the doors towards their closed positions.

In an embodiment of any of the above embodiments, at least one of the couplings comprises a pivot and a channel along which the pivot may move when the or each door to which the support structure is coupled moves between the closed position and an open position.

In an embodiment of any of the above embodiments, the pivot and a channel along which the pivot may move are so configured that at least a part of the pivot is retained in the channel.

In an embodiment of any of the above embodiments, the channel is fixed to or integral with a door, and the pivot allows the relative orientation between the door and the support structure to change as the pivot travels along the channel.

In an embodiment of any of the above embodiments, at least one of the couplings includes a biasing means which is configured to bias the pivot to one end of the channel. The biasing of the pivot to one end of the channel may cause the door with which the coupling is associated to be biased towards its closed position or towards an open position.

In an embodiment of any of the above embodiments, at least one of the couplings is releasable. This allows the support structure to be easily removed from or placed into the interior.

In an embodiment of any of the above embodiments, the item of galley equipment comprises one of a heater element and is a food heater or oven, or the item of galley equipment comprises a chiller element and is a fridge.

According to a second aspect of the present disclosure, there is provided a vessel which includes a galley, the galley comprises at least one item of galley equipment according to the first aspect of the present disclosure, and the vessel is an aircraft, ship, boat, train, or railway carriage.

The present invention will be further described and explained by way of example with reference to the accompanying drawings in which
Figure 1 shows a perspective view of a first embodiment of an item of galley equipment according to the present disclosure with the doors closed;
Figure 2 shows a schematic perspective view of an embodiment of an interior liner of the item of galley equipment of Figure 1;
Figure 3 shows a schematic perspective view of an embodiment of a support structure of the item of galley equipment of Figure 1;
Figure 4 shows an exploded perspective view of an embodiment of a coupling of the item of galley equipment of Figure 1;
Figure 5 shows a perspective view of the item of galley equipment of Figure 1 with the doors open;
Figure 6 shows a sectional view along the line A-A' of a part of the item of galley equipment of Figure 1 when the doors are closed;
Figure 7 shows a sectional view along the line A-A' of a part of the item of galley equipment of Figure 1 when the doors are open;
Figure 8 shows a schematic detail an embodiment of the catch of the item of galley equipment of Figure 1;
Figure 9 shows a schematic detail of the second door supporting a part of the catch of Figure 8 without the part of the catch present;
Figure 10 shows a schematic detail of the second door supporting a part of the catch of Figure 8 with the part of the catch present;
Figure 11 shows a schematic detail of the first door supporting a part of the catch of Figure 8;
Figure 12 shows a schematic detail of the catch of Figure 8 with the doors not shown and the catch in the open position;
Figure 13 shows a schematic detail of the catch of Figure 8 with the doors not shown and the catch in the closed position; and
Figure 14 shows a schematic detail of a second embodiment of an item of galley equipment according to the present disclosure.

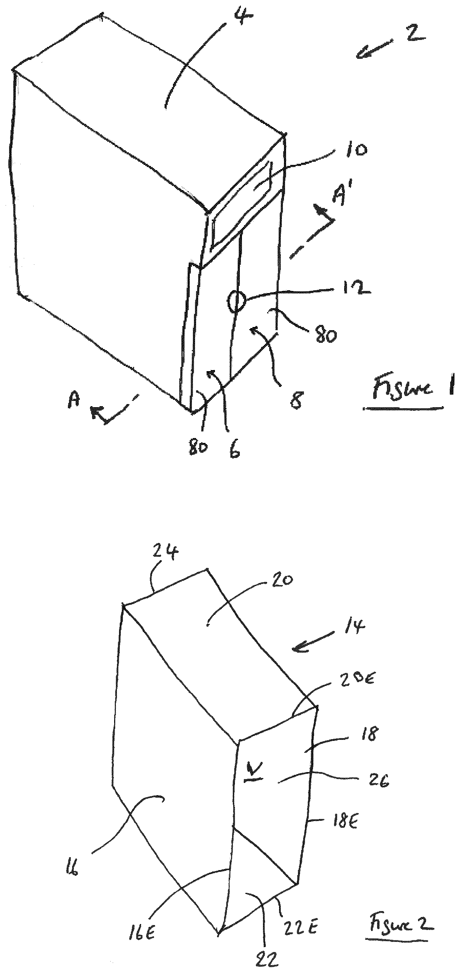

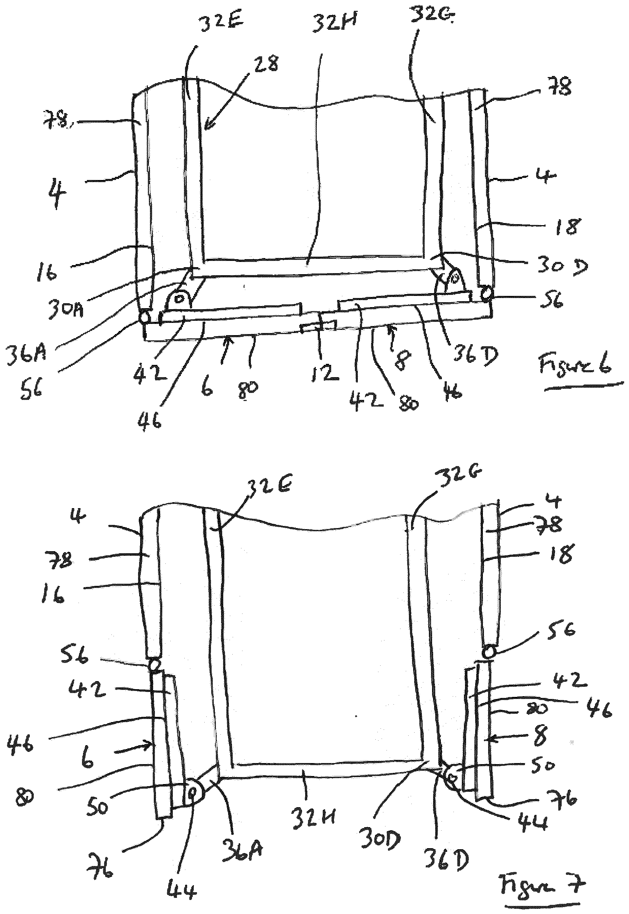

With reference to Figures 1 and 6, an oven 2 is an item of galley equipment. The oven 2 includes an outer shell 4, a first door 6 and a second door 8. A control panel 10 is also provided to control a heating means within the oven (not shown). The first and second doors 4, 6 are held in a closed position (as shown) by a catch 12. The first and second doors 4, 6 are attached to the outer shell 4 by hinges 56. The hinges 56 have parallel axis of rotation (not shown) and allow the first and second doors 4, 6 to rotate around the hinges 56. From the closed position where the edges 76 of the first and second doors 4, 6 remote from the hinges 56 (termed first edges 76) are adjacent to each other, to an open position in which access to the interior of the oven 2 may be gained.

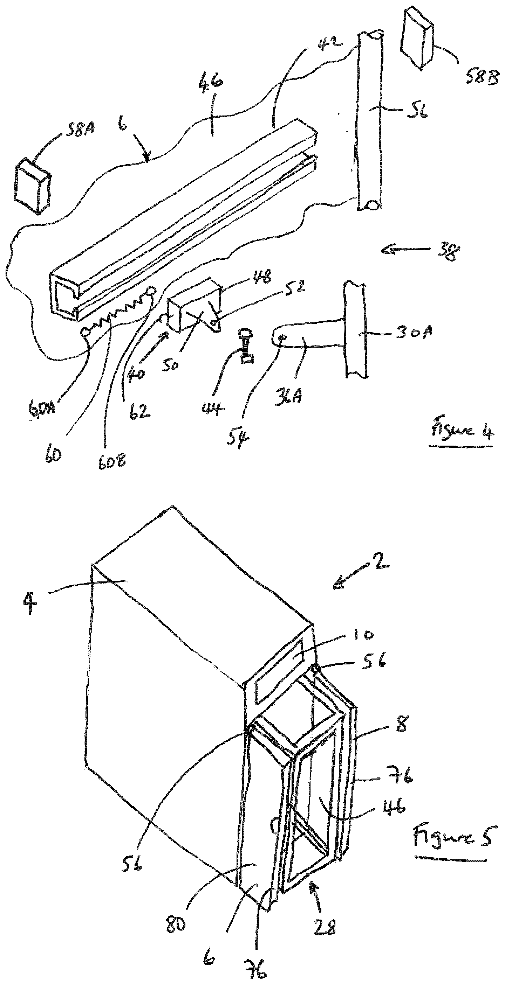

Each of the first and second doors 6, 8 have a closure face 46 (which is the face that partially closes the access mouth 26 when the first or second door 6, 8 is in its closed position and which is shown in figures 4 to 7) and an outer face 80.

With reference to Figure 2 and 6, housed within the shell 4 is an interior liner 14. The interior liner 14 is formed from first and second side walls 16, 18, a top wall 20, a bottom wall 22 and a back wall 24. Those walls 16, 18, 20, 22, 24 collectively define and surround 5 sides of an interior V which is a substantially rectangular cuboid volume. The edges 16E, 18E, 20E, 22E of walls 16, 18, 20, 22 which are not shared with a different wall define an access mouth 26. The interior liner 14 is spaced from the outer shell 4 and the space between the interior liner 14 and outer shell 4 is filled with an insulating material 78.

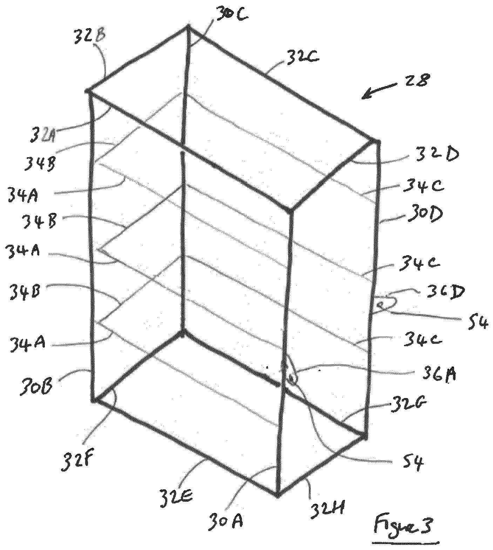

With reference to Figure 3, within the interior V a support structure in the form of a support frame 28 may be located. The support frame 28 is dimensioned to wholly fit within the interior V and to be able to pass through the access mouth 26. The support frame is formed from upright frame members 30A, 30B, 30C, 30D and eight cross members 32A, 32B, 32C, 32D, 32E, 32F, 32G 32H to form a rectangular cuboid shaped frame. Extending between upright frame members 30A and 30B are a plurality of tray supports 34A, extending between upright frame members 30B and 30C are a plurality of tray supports 34B, and extending between upright frame members 30C and 30D are a plurality of tray supports 34C. In Figure 3 three of each of tray support members 34A, 34B, and 34C are shown. Other numbers of tray supports 34A, 34B, and 34C may be present and fall within the scope of this disclosure. Each of the tray supports 34A, 34B, and 34C are substantially parallel to cross members 32A, 32B, and 32C respectively.

Attached to the upright frame members 30A and 30D are coupling plates 36A and 36D. Each of the coupling plates 36A and 36D includes an aperture 54 passing through the coupling plate 36A and 36D.

With reference to Figure 4, a coupling 38 comprises a coupling plate 36A, a pivot block 40, a channel 42, a coupling pin 44 and a tension spring 60. The channel 42 is attached to the closure face 46 of the first door 6 by means not shown.

The channel 42 is configured to receive a base part 48 of the pivot block 40, to loosely retain the base part 48 within the channel 42, and to allow the base part 48 to travel along the channel 42. The ends of the channel 42 are blocked by stops 58A, 58B which prevent the base part 48 exiting one of the ends of the channel 42.

Extending from the base part 48 of the pivot block 40 in a direction away from the channel 42 is a pivot plate 50. The pivot plate 50 includes an aperture 52.

A biasing element 60 in the form of a tension spring has a first end 60A and a second end 60B. The first end 60A of the biasing element 60 is adapted to be engaged with the stop block 58A via an engagement element (not shown). The second end 60B of the engagement element 60 is adapted to engage with the pivot block 40 via an engagement element 62. The biasing element 60 causes the pivot block to be biased toward a position along the channel 42 that is adjacent to the stop 58A, that is a position at the end of the channel 42 remote from the hinge 58.

The channel 42 and the coupling plate 36A are so located on the first door 6 and upright 30A respectively that the when the support frame 28 is at least partially located in the interior V the pivot block 40 can be moved along the channel 42 so that the apertures 52 and 54 in the pivot plate 50 and coupling plate 36A are adjacent to each other and approximately co-axial. The coupling pin 44 can then be passed through both of the apertures 52 and 54 and the pivot plate 50 and coupling plate 36A loosely and pivotally coupled to each other.

A coupling 38 is formed between the second door 8 and the support frame 28 in the same fashion as is described above in connection with the first door 6. The only difference to the coupling with the first door 6 is that the pivot plate 50 on the second door 8 couples to the coupling plate 36D.

With reference to Figure 5, and 7, the oven 2 is shown with the first and second doors 6, 8 in their fully open positions. The first and second doors 6, 8 are coupled to the support frame 28 by the couplings 38 (not shown in Figure 5). The first and second doors 6, 8 are each attached to the outer shell 4 by the hinge 56.

The effect of coupling the first and second doors 6, 8 to the support frame 28 is that when the first and second doors are rotated about their hinges 56 the support frame 28 is caused to move into and out of the volume V. A further effect is that a user moving only one of the first and second doors 4, 6 between the closed position and an open position of the door will cause both the above described movement of the support frame 28 and movement of the other of the first and second doors 4. The biasing means 60 helps the pivot blocks 40 move along the channels 42 when the first and second doors 6, 8 are opened and to help avoid jamming of the first and second doors 6.8 and the support frame 28.

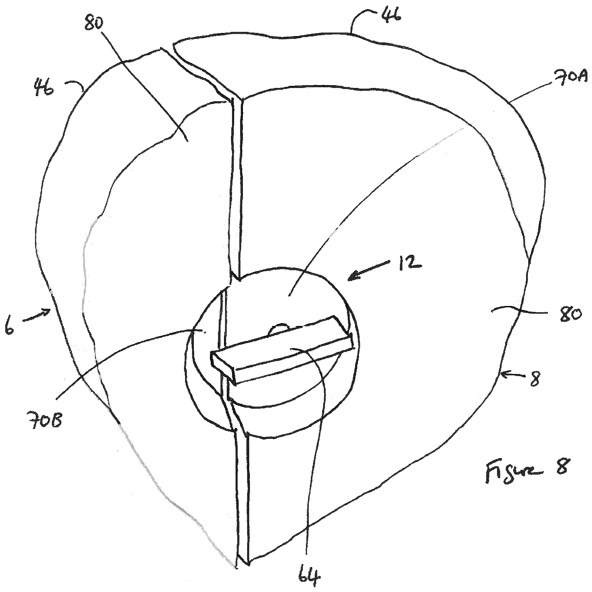

With reference to Figures 8 to 13, the catch 12 is so configured that it can reversibly retain the first and second doors 6, 8 in their closed position by forming an engagement between the two doors 6, 8. The catch 12 is formed from a mobile catch element 12A and a static catch element 12B.

The mobile catch element 12A is, in the embodiment illustrated in Figures 1 to 13, mounted in the second door 8, and the static catch 12B mounted in the first door 6.

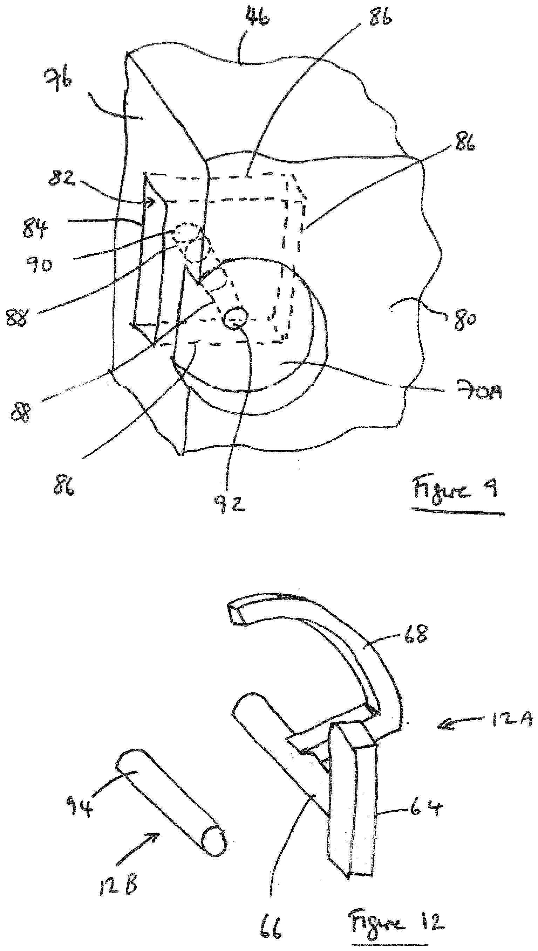

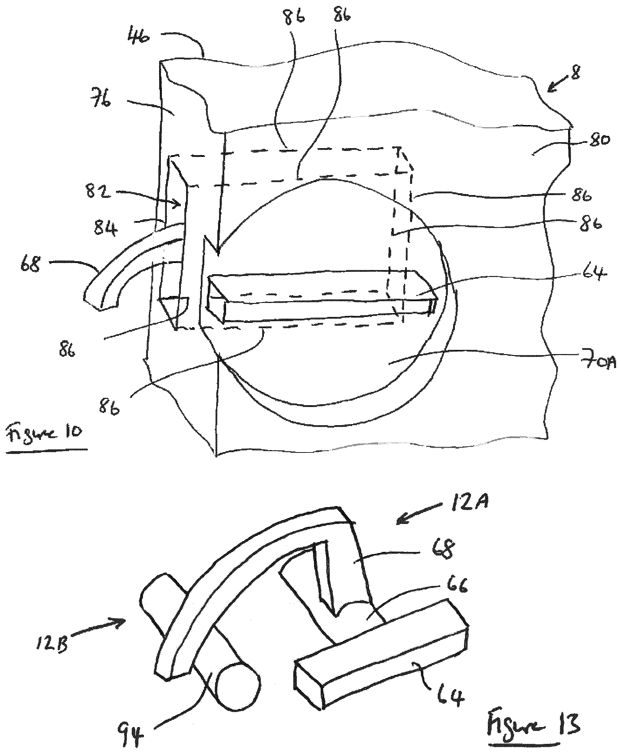

As shown in Figures 12 and 13, the mobile catch element 12A is formed from a user actuation means in the form of a handle 64, a rotation means in the form of a shaft 66 and a latch arm 68.

As shown in Figures 9 and 10, the second door 8 includes a surface recess 70A in the outer surface 80. The recess 70A is adjacent to and intersects the first edge 76 of the second door 8. The recess 70A is of sufficient depth that the handle 64 is fully within the volume defined by the recess 70A and does not extend out of the plane defined by the outer surface 80 of the second door 8.

The second door 8 also defines slot 82. The slot 82 has a mouth 84 in the first edge 76 of the door 8, and extends into the body of the second door 8. The boundaries of the slot 82 are shown by dashed lines 86. Intersecting the slot 82 is a bore 88 which has a mouth 92 opening into recess 70A, and a blind end 90.

The shaft 66 of the mobile catch element 66 is attached at a first end to the handle 64 and is dimensioned to fit within the bore 88 in the second door 8. The bore 88 and shaft 66 are both of circular cross-section and the shaft 66 my rotate around it's longitudinal axis whilst within the bore 88. Also attached to the shaft 66 is the latch arm 68. The latch arm 68 is attached to the shaft 66 at a position that allows the latch arm 68 to extend into the slot 82 in the second door 8. Rotation of the shaft 66 around its longitudinal axis causes the latch arm to sweep through a portion of the slot 82.

The bore 88 is so located in the second door 8 that the rotation of the shaft 66 around its longitudinal axis causes the latch arm to sweep through a portion of the slot 82 and in some parts of the rotation a portion of the latch arm 68 extends out of the slot 82 through the slot mouth 84.

The positioning of the recess 70A in the outer surface 80 of the second door 8 is such that the handle 64 of the mobile catch element 12A may rotate with the shaft 66 and not interfere with the portions of the second door 8 that define the recess 70A.

The static catch element 12B, as shown in Figures 12 and 13, is formed from a catch bar 94.

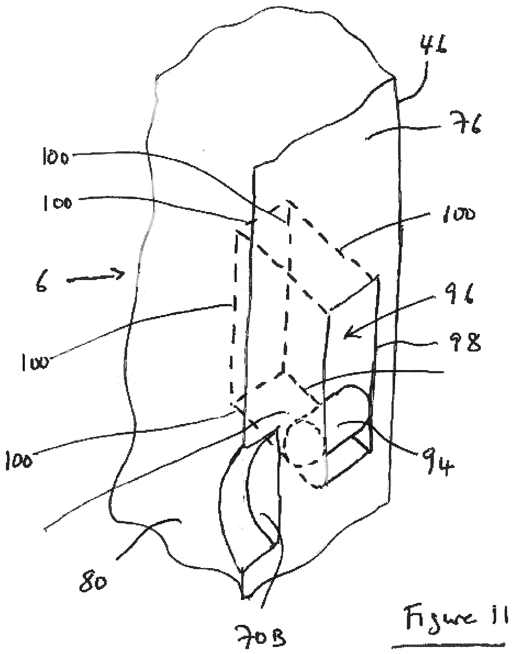

As shown in Figure 11, the first door 6 includes a surface recess 70B in the outer surface 80. The recess 70B is adjacent to and intersects the first edge 76 of the first door 6. The recess 70B allows a space between the end of the handle 64 of the mobile catch element 12A and the body of the first door 6.

The first door 6 also defines slot 96. The slot 96 has a mouth 98 in the first edge 76 of the door 6, and extends into the body of the first door 6. The boundaries of the slot 96 are shown by dashed lines 100. The catch bar 94 extends across the slot 96. The slot 96 is so dimensioned that the end of the latch arm 68 can, when the first and second doors 6, 8 are in their closed positions extend into the slot 96 through the mouth 98 and pass behind the catch bar 94 into the latching void 102. This position is illustrated in Figure 13 which, for clarity, shows only the mobile and static catch elements 12A, 12B.

When the mobile and static catch elements 12A, 12B are orientated as shown in Figure 13 the location of the end of the latch arm 68 in the latching void 102 (shown in Figure 11) has the effect that the first and second doors 6, 8 cannot rotate about their hinges 56 and away from each other because the catch bar 94 prevents the latch arm 68 leaving the slot 96 in the first door 6.

As may be seen in Figures 12 and 13, the orientation of the handle 64 relative to the second door 8 is directly linked to the position of the latch arm 68 and may thus give a viewer of the handle 64 an indication of the orientation of the latch arm 68 and hence whether the catch elements 12A, 12B are in a closed or locked configuration (as shown in Figure 13) or an open configuration (as shown in Figure 12).

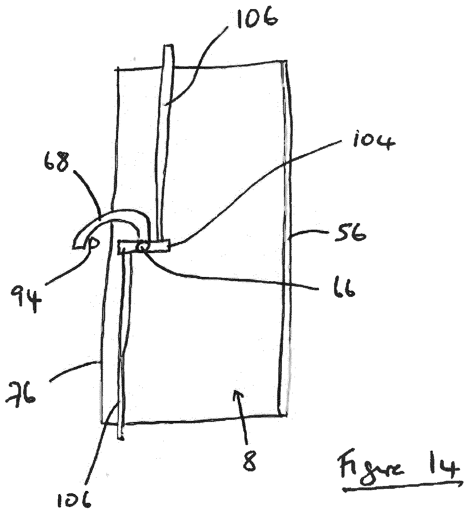

With reference to Figure 14, a second embodiment of an oven 2 is as the above described embodiment with the addition of a cam arm 104 and a pair of catch elements 106. The cam arm 104 is fixed to the shaft 66 and so configured that rotation of the shaft 66 to move the latch arm 68 from the closed position illustrated in Figure 14 to an open position causes the catch elements 106 to withdraw from the extended position shown in Figure 14 (where a part of each catch element 106 projects out of the door 8) to a position where all or substantially all of the catch element is within the structure of the door. When the catch elements 106 are in their extended position they can engage with the outer shell 4 of the oven to assist in securely holding the first and second doors 6, 8 in the closed position.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the items of galley equipment disclosed in the various embodiments may be used alone or in a variety of arrangements not specifically discussed in the embodiments described above. This disclosure is therefore not limited in its application to the details and arrangement of components set forth in the foregoing description or illustrated in the drawings. Although particular embodiments have been shown and described, it will be obvious to those skilled in the art that changes and modifications may be made without departing from this invention as claimed in its broader aspects. The scope of the following claims should not be limited by the embodiments set forth in the examples, but should be given the broadest reasonable interpretation consistent with the description as a whole.

## Claims

1. An item of galley equipment (2) comprising an interior liner (14), a first and a second door (6,8), and a catch (12), in which
the interior liner (14) defines an interior and an access mouth (26),
the catch (12) comprises a static part (12B) and a mobile part (12A),
the first door (6) comprises a first part of the catch (12) and is hingedly connected by a hinge connection (56) to a part (4) of the item of galley equipment (2) which is not the second door (8) or supported on the second door (8),
the first door (6) may reversibly rotate about the hinge connection (56) between an open position and a closed position,
the second door (8) comprises a second part of the catch (12) and is hingedly connected by a hinge connection (56) to a part (4) of the item of galley equipment (2) which is not the first door (6) or supported on the first door (6),
the second door (8) may reversibly rotate about the hinge connection (56) between an open position and a closed position, and
when both the first and second doors (6, 8) are in their closed position the first and second doors (6, 8) are adjacent to each other and close the access mouth (26) and the static and mobile parts (12B, 12A) of the catch (12) may reversibly engage with each other, wherein
the first and second doors (6, 8) each have a first edge (76), the first edges (76) of the first and second doors (6, 8) are adjacent to each other when both the first and second doors (6, 8) are in their closed position, one of the parts (12A, 12B) of the catch (12) is supported on the first door (6) adjacent to a portion of the first edge (76) of the first door, the other part (12A, 12B) of the catch (12) is supported on the second door (8) adjacent to a portion of the first edge (76) of the second door (8), and when both the first and second doors (6, 8) are in their closed position the mobile part (12A) of the catch may reversibly move between an open configuration in which the mobile and static parts (12A, 12B) of the catch are not engaged with each other and a closed configuration in which the mobile and static parts (12A, 12B) of the catch are engaged with each other,
the mobile part (12A) of the catch does not extend from the first edge (76) of the door on which it is supported when the mobile part (12A) of the catch is in the open configuration and does extend from the first edge (76) of the door on which it is supported when the mobile part (12A) of the catch is in the closed configuration, and the static part (12B) of the catch does not extend from the first edge (76) of the door on which it is supported.

2. An item of galley equipment (2) according to claim 1 in which the access mouth (26) is rectangular and the first and second doors (6, 8) are of substantially the same dimensions as each other.

3. An item of galley equipment (2) according to claims 1 or 2 in which the mobile part (12A) of the catch comprises at least one catch element (106) that may reversibly engage with a part (4) of the item of galley equipment (2) that is not a door (6, 8) or the static catch part (12B) when both the first and second doors (6, 8) are in their closed position.

4. An item of galley equipment (2) according to claim 3 in which the engagement of the mobile and static catch parts (12A, 12B) causes engagement of the or each catch element (106) with the or each part (4) of the item of galley equipment (2) that is not a door or the other catch part (12A, 12B).

5. An item of galley equipment (2) according to any of claims 1 to 4 in which the item of galley equipment (2) comprises a support structure (28), in which the support structure (28) is so configured that it will fit within the interior and pass through the access mouth (26), one of the first and second doors (6, 8) is coupled to the support structure (28) via a coupling (38), and movement of the door (6, 8) coupled to the support structure (28) between its closed position and an open position causes the support structure (28) to be moved from a retracted position in which the support structure (28) is substantially wholly within the interior to an extended position in which at least part of the support structure (28) extends out of the interior through the access mouth (26).

6. An item of galley equipment (2) according to claim 5 in which the other of the first and second doors (6, 8) is also coupled to the support structure (28) via a second coupling element (38) and movement of the first and second doors (6, 8) between their closed positions and open positions causes the support structure (28) to be moved from the retracted to the extended position.

7. An item of galley equipment (2) according to claim 5 or 6 in which a user to contacting and moving one of the first and second doors (6, 8) from the closed position to an open position causes the support structure (28) to be moved from the retracted to the extended position and the other of the first and second doors (6, 8) which is not contacted by the user to move from its closed position to an open position.

8. An item of galley equipment (2) according to any of claims 5 to 7 in which the movement of the door or doors (6, 8) coupled to the support structure (28) from an open position to the closed position causes the support structure (28) to move from an extended position to the retracted position.

9. An item of galley equipment (2) according to any of claims 5 to 8 in which the support structure (28) reversibly latches in an extended position when the or each door (6, 8) to which the support structure (28) is coupled moves into a predetermined open position, and the latching of the support structure (28) needs to be released before each door (6, 8) to which the support structure is coupled may move towards its closed position.

10. An item of galley equipment (2) according to any of claims 5 to 9 in which at least one of the couplings (38) comprises a pivot (40) and a channel (42) along which the pivot (40) may move when the or each door (6, 8) to which the support structure (28) is coupled moves between the closed position and an open position.

11. An item of galley equipment (2) according to any of claims 1 to 10 in which the item of galley equipment (2) comprises one of a heater element and is a food heater or oven, or the item of galley equipment (2) comprises a chiller element and is a fridge.

12. A vessel comprising a galley in which the galley comprises at least one item of galley equipment (2) according to any of claims 1 to 11, and the vessel is an aircraft, ship, boat, train, or railway carriage.

## Patentansprüche

1. Küchenausrüstungsgegenstand (2), umfassend eine Innenauskleidung (14), eine erste und eine zweite Tür (6, 8) und einen Verschluss (12), wobei
die Innenauskleidung (14) einen Innenraum und eine Zugangsöffnung (26) definiert,
der Verschluss (12) einen statischen Teil (12B) und einen beweglichen Teil (12A) umfasst,
die erste Tür (6) einen ersten Teil des Verschlusses (12) umfasst und durch eine Scharnierverbindung (56) gelenkig mit einem Teil (4) des Küchenausrüstungsgegenstands (2) verbunden ist, der nicht die zweite Tür (8) ist oder an der zweiten Tür (8) getragen ist,
die erste Tür (6) sich um die Scharnierverbindung (56) zwischen einer offenen Position und einer geschlossenen Position reversibel drehen kann,
die zweite Tür (8) einen zweiten Teil des Verschlusses (12) umfasst und durch eine Scharnierverbindung (56) gelenkig mit einem Teil (4) des Küchenausrüstungsgegenstands (2) verbunden ist, der nicht die erste Tür (6) ist oder an der ersten Tür (6) getragen ist,
die zweite Tür (8) sich um die Scharnierverbindung (56) zwischen einer offenen Position und einer geschlossenen Position reversibel drehen kann, und
wenn sich sowohl die erste als auch die zweite Tür (6, 8) in ihrer geschlossenen Position befinden, die erste und die zweite Tür (6, 8) benachbart zueinander liegen und die Zugangsöffnung (26) verschließen, und der statische und der bewegliche Teil (12B, 12A) des Verschlusses (12) reversibel ineinander eingreifen können, wobei
die erste und die zweite Tür (6, 8) jeweils eine erste Kante (76) aufweisen, die ersten Kanten (76) der ersten und der zweiten Tür (6, 8) benachbart zueinander liegen, wenn sich sowohl die erste als auch die zweite Tür (6, 8) in ihrer geschlossenen Stellung befinden, einer der Teile (12A, 12B) des Verschlusses (12) an der ersten Tür (6) benachbart zu einem Abschnitt der ersten Kante (76) der ersten Tür getragen ist, der andere Teil (12A, 12B) des Verschlusses (12) an der zweiten Tür (8) benachbart zu einem Abschnitt der ersten Kante (76) der zweiten Tür (8) getragen ist, und wenn sich sowohl die erste als auch die zweite Tür (6, 8) in ihrer geschlossenen Stellung befinden, der bewegliche Teil (12A) des Verschlusses sich reversibel zwischen einer offenen Konfiguration, in der der bewegliche und der statische Teil (12A, 12B) des Verschlusses nicht miteinander in Eingriff stehen, und einer geschlossenen Konfiguration, in der der bewegliche und der statische Teil (12A, 12B) des Verschlusses miteinander in Eingriff stehen, bewegen kann,
der bewegliche Teil (12A) des Verschlusses sich nicht von der ersten Kante (76) der Tür, an der er getragen ist, erstreckt, wenn sich der bewegliche Teil (12A) des Verschlusses in der offenen Konfiguration befindet, und sich von der ersten Kante (76) der Tür, an der er getragen ist, erstreckt, wenn sich der bewegliche Teil (12A) des Verschlusses in der geschlossenen Konfiguration befindet, und der statische Teil (12B) des Verschlusses sich nicht von der ersten Kante (76) der Tür, an der er getragen ist, erstreckt.

2. Küchenausrüstungsgegenstand (2) nach Anspruch 1, wobei die Zugangsöffnung (26) rechteckig ist und die erste und die zweite Tür (6, 8) im Wesentlichen die gleichen Abmessungen aufweisen.

3. Küchenausrüstungsgegenstand (2) nach Anspruch 1 oder 2, wobei der bewegliche Teil (12A) des Verschlusses mindestens ein Verschlusselement (106) umfasst, das reversibel in einen Teil (4) des Küchenausrüstungsgegenstands (2), der keine Tür (6, 8) ist, oder den statischen Verschlussteil (12B) eingreifen kann, wenn sich sowohl die erste als auch die zweite Tür (6, 8) in ihrer geschlossenen Position befinden.

4. Küchenausrüstungsgegenstand (2) nach Anspruch 3, wobei der Eingriff des beweglichen und des statischen Verschlussteils (12A, 12B) einen Eingriff des oder jedes Verschlusselements (106) mit dem oder jedem Teil (4) des Küchenausrüstungsgegenstands (2) bewirkt, der keine Tür oder das andere Verschlussteil (12A, 12B) ist.

5. Küchenausrüstungsgegenstand (2) nach einem der Ansprüche 1 bis 4, wobei der Küchenausrüstungsgegenstand (2) eine Trägerstruktur (28) umfasst, wobei die Trägerstruktur (28) so konfiguriert ist, dass sie in den Innenraum passt und durch die Zugangsöffnung (26) geht, eine der ersten und der zweiten Tür (6, 8) über eine Kupplung (38) mit der Trägerstruktur (28) gekoppelt ist und eine Bewegung der mit der Trägerstruktur (28) gekoppelten Tür (6, 8) zwischen ihrer geschlossenen Position und einer offenen Position bewirkt, dass die Trägerstruktur (28) aus einer eingefahrenen Position, in der sich die Trägerstruktur (28) im Wesentlichen vollständig innerhalb des Innenraums befindet, in eine ausgefahrene Position, in der sich mindestens ein Teil der Trägerstruktur (28) durch die Zugangsöffnung (26) aus dem Innenraum erstreckt, bewegt wird.

6. Küchenausrüstungsgegenstand (2) nach Anspruch 5, wobei die andere der ersten und der zweiten Tür (6, 8) ebenfalls über ein zweites Kupplungselement (38) mit der Trägerstruktur (28) gekoppelt ist und eine Bewegung der ersten und der zweiten Tür (6, 8) zwischen ihren geschlossenen Positionen und offenen Positionen bewirkt, dass die Trägerstruktur (28) aus der eingefahrenen in die ausgefahrene Position bewegt wird.

7. Küchenausrüstungsgegenstand (2) nach Anspruch 5 oder 6, wobei ein Berühren und Bewegen einer der ersten und der zweiten Tür (6, 8) aus der geschlossenen Position in eine offene Position durch einen Benutzer bewirkt, dass die Trägerstruktur (28) aus der eingefahrenen in die ausgefahrene Position bewegt wird und die andere der ersten und der zweiten Tür (6, 8), die nicht von dem Benutzer berührt wird, aus ihrer geschlossenen Position in eine offene Position bewegt wird.

8. Küchenausrüstungsgegenstand (2) nach einem der Ansprüche 5 bis 7, wobei die Bewegung der mit der Trägerstruktur (28) gekoppelten Tür oder Türen (6, 8) aus einer offenen Position in die geschlossene Position bewirkt, dass sich die Trägerstruktur (28) aus einer ausgefahrenen Position in die eingefahrene Position bewegt.

9. Küchenausrüstungsgegenstand (2) nach einem der Ansprüche 5 bis 8, wobei die Trägerstruktur (28) reversibel in einer ausgefahrenen Position einrastet, wenn die oder jede Tür (6, 8), mit der die Trägerstruktur (28) gekoppelt ist, sich in eine vorgegebene offene Position bewegt, und das Einrasten der Trägerstruktur (28) gelöst werden muss, bevor sich jede Tür (6, 8), mit der die Trägerstruktur gekoppelt ist, in Richtung ihrer geschlossenen Position bewegen kann.

10. Küchenausrüstungsgegenstand (2) nach einem der Ansprüche 5 bis 9, wobei mindestens eine der Kupplungen (38) einen Drehzapfen (40) und einen Kanal (42) umfasst, entlang dem sich der Drehzapfen (40) bewegen kann, wenn sich die oder jede Tür (6, 8), mit der die Trägerstruktur (28) gekoppelt ist, zwischen der geschlossenen Position und einer offenen Position bewegt.

11. Küchenausrüstungsgegenstand (2) nach einem der Ansprüche 1 bis 10, wobei der Küchenausrüstungsgegenstand (2) entweder ein Heizelement umfasst und ein Speisenwärmer oder ein Ofen ist, oder der Küchenausrüstungsgegenstand (2) ein Kühlelement umfasst und ein Kühlschrank ist.

12. Schiff, umfassend eine Küche, wobei die Küche mindestens einen Küchenausrüstungsgegenstand (2) nach einem der Ansprüche 1 bis 11 umfasst und das Schiff ein Luftfahrzeug, Schiff, Boot, Zug oder Eisenbahnwaggon ist.

## Revendications

1. Un élément d'équipement de cuisine (2) comprenant une doublure intérieure (14), une première et une deuxième porte (6, 8) et un loquet (12), dans lequel
la doublure intérieure (14) définit un intérieur et une bouche d'accès (26),
le loquet (12) comprend une partie statique (12B) et une partie mobile (12A),
la première porte (6) comprend une première partie du loquet (12) et est reliée de manière articulée par une liaison charnière (56) à une partie (4) de l'élément d'équipement de cuisine (2) qui n'est pas la deuxième porte (8) ou qui n'est pas supportée sur la deuxième porte (8),
la première porte (6) peut tourner de manière réversible autour de la liaison charnière (56) entre une position ouverte et une position fermée,
la deuxième porte (8) comprend une deuxième partie du loquet (12) et est reliée de manière articulée par une liaison charnière (56) à une partie (4) de l'élément d'équipement de cuisine (2) qui n'est pas la première porte (6) ou qui n'est pas supportée sur la première porte (6),
la deuxième porte (8) peut tourner de manière réversible autour de la liaison charnière (56) entre une position ouverte et une position fermée, et
lorsque les première et deuxième portes (6, 8) sont toutes deux dans leur position fermée, les première et deuxième portes (6, 8) sont adjacentes l'une à l'autre et ferment la bouche d'accès (26) et les parties statiques et mobiles (12B, 12A) du loquet (12) peuvent entrer en prise de manière réversible l'une avec l'autre, dans lequel
les première et deuxième portes (6, 8) ont chacune un premier bord (76), les premiers bords (76) des première et deuxième portes (6, 8) sont adjacents l'un à l'autre lorsque les première et deuxième portes (6, 8) sont toutes deux dans leur position fermée, l'une des parties (12A, 12B) du loquet (12) est supportée sur la première porte (6) adjacente à une partie du premier bord (76) de la première porte, l'autre partie (12A, 12B) du loquet (12) est supportée sur la deuxième porte (8) adjacente à une partie du premier bord (76) de la deuxième porte (8), et lorsque les première et deuxième portes (6, 8) sont toutes deux dans leur position fermée, la partie mobile (12A) du loquet peut se déplacer de manière réversible entre une configuration ouverte dans laquelle les parties mobile et statique (12A, 12B) du loquet ne sont pas en prise l'une avec l'autre et une configuration fermée dans laquelle les parties mobile et statique (12A, 12B) des prises sont mises en prise les unes avec les autres,
la partie mobile (12A) du loquet ne se prolonge pas à partir du premier bord (76) de la porte sur lequel elle prend appui lorsque la partie mobile (12A) du loquet est en configuration ouverte et ne se prolonge pas à partir du premier bord (76) de la porte sur lequel elle prend appui lorsque la partie mobile (12A) du loquet est en configuration fermée, et la partie statique (12B) du loquet ne se prolonge pas à partir du premier bord (76) de la porte sur lequel elle prend appui.

2. Élément d'équipement de cuisine (2) selon la revendication 1 dans lequel la bouche d'accès (26) est rectangulaire et les première et deuxième portes (6, 8) ont sensiblement les mêmes dimensions l'une que l'autre.

3. Élément d'équipement de cuisine (2) selon les revendications 1 ou 2 dans lequel la partie mobile (12A) du loquet comprend au moins un élément de loquet (106) qui peut entrer en prise de manière réversible avec une partie (4) de l'élément d'équipement de cuisine (2) qui n'est pas une porte (6, 8) ou la partie de loquet statique (12B) lorsque les première et deuxième portes (6, 8) sont toutes deux dans leur position fermée.

4. Élément d'équipement de cuisine (2) selon la revendication 3 dans lequel l'engagement des parties de loquet mobile et statique (12A, 12B) provoque l'engagement du ou de chaque élément de loquet (106) avec la ou chaque partie (4) de l'élément d'équipement de cuisine (2) qui n'est pas une porte ou l'autre partie de loquet (12A, 12B).

5. Élément d'équipement de cuisine (2) selon l'une quelconque des revendications 1 à 4, dans lequel l'élément d'équipement de cuisine (2) comprend une structure de support (28), dans laquelle la structure de support (28) est configurée de telle sorte qu'elle s'adapte à l'intérieur et passe à travers la bouche d'accès (26), l'une des première et deuxième portes (6, 8) est couplée à la structure de support (28) via un couplage (38), et le mouvement de la porte (6, 8) couplée à la structure de support (28) entre sa position fermée et une position ouverte provoque le déplacement de la structure de support (28) d'une position rétractée dans laquelle la structure de support (28) est sensiblement entièrement à l'intérieur vers une position prolongée dans laquelle au moins une partie de la structure de support (28) se prolonge hors de l'intérieur à travers la bouche d'accès (26).

6. Élément d'équipement de cuisine (2) selon la revendication 5 dans lequel l'autre des première et deuxième portes (6, 8) est également couplée à la structure de support (28) via un deuxième élément de couplage (38) et le mouvement des première et deuxième portes (6, 8) entre leurs positions fermées et leurs positions ouvertes provoque le déplacement de la structure de support (28) de la position rétractée à la position prolongée.

7. Élément d'équipement de cuisine (2) selon la revendication 5 ou 6, dans lequel le fait pour un utilisateur de contacter et de déplacer l'une des première et deuxième portes (6, 8) de la position fermée à une position ouverte provoque le déplacement de la structure de support (28) de la position rétractée à la position prolongée et le déplacement de l'autre des première et deuxième portes (6, 8) qui n'est pas contactée par l'utilisateur de sa position fermée à une position ouverte.

8. Élément d'équipement de cuisine (2) selon l'une quelconque des revendications 5 à 7 dans lequel le mouvement de la ou des portes (6, 8) couplées à la structure de support (28) d'une position ouverte à la position fermée provoque le déplacement de la structure de support (28) d'une position prolongée à la position rétractée.

9. Élément d'équipement de cuisine (2) selon l'une quelconque des revendications 5 à 8, dans lequel la structure de support (28) se verrouille de manière réversible dans une position prolongée lorsque la ou chaque porte (6, 8) à laquelle la structure de support (28) est couplée se déplace dans une position ouverte prédéterminée, et le verrouillage de la structure de support (28) doit être libéré avant que chaque porte (6, 8) à laquelle la structure de support est couplée puisse se déplacer vers sa position fermée.

10. Élément d'équipement de cuisine (2) selon l'une quelconque des revendications 5 à 9 dans lequel au moins l'un des couplages (38) comprend un pivot (40) et un canal (42) le long duquel le pivot (40) peut se déplacer lorsque la ou chaque porte (6, 8) à laquelle la structure de support (28) est couplée se déplace entre la position fermée et une position ouverte.

11. Élément d'équipement de cuisine (2) selon l'une quelconque des revendications 1 à 10, dans lequel l'élément d'équipement de cuisine (2) comprend un élément chauffant et est un réchauffeur d'aliments ou un four, ou l'élément d'équipement de cuisine (2) comprend un élément refroidisseur et est un réfrigérateur.

12. Navire comprenant une cuisine dans lequel la cuisine comprend au moins un élément d'équipement de cuisine (2) selon l'une quelconque des revendications 1 à 11, et le navire est un avion, un navire, un bateau, un train ou un wagon de chemin de fer.
